# EUROPEAN PATENT APPLICATION

(11) **EP 4 325 069 A1**
(43) Date of publication of application: **21.02.2024**
(21) Application number: 22190884.1
(22) Date of filing: 18.08.2022
(51) Int. Cl.: F16B 5/00

(54) **PANEL CONNECTOR WITH ADDITIONAL INTERLOCK**

(71) Applicant: Hilti Aktiengesellschaft, 9494 Schaan (LI)
(72) Inventor: Schneider, Roland, 6824 Schlins (AT)
(74) Representative: Hilti Aktiengesellschaft Corporate Intellectual Property

(57) **Abstract**

Panel connector, comprising a first head, a second head, and a linkage, which connects the first head and the second head with one another, and which is suitable for drawing the first head and the second head together, wherein the panel connector further comprises a plug, which is arranged on the first head, wherein the second head comprises a socket for receiving the plug as the first head and the second head are drawn together by means of the linkage.

## Description

The invention relates to a panel connector according to the preamble of claim 1, thereby comprising
- a first head,
- a second head, and
- a linkage, which connects the first head and the second head with one another, and which is suitable for drawing the first head and the second head together.

Connecting floor and/or wall panels is a relevant application in timber construction.

Traditional panel connecting methods can be time-consuming, laborious, and exhaustive processes. In an example of a traditional method, the panels are first manually aligned to their final positions by devices such as beam hoists, ratchet straps or rubber hammers. When the panels are in their final position, fastening is done in another step by means of nailing or screwing.

US2015099083 A1 discloses panel connectors comprising two anchor elements, which are intended to be placed in corresponding recesses in adjacent panels, and to then be drawn together by means of a screw drive. US2015099083 A1 teaches to form the anchor elements as half-cylinders. A worktop connector that is based on a screw drive mechanism is described in DE29717630 U1.

Other panel connectors having dogbone structures are known from AT15052 U1

Other panel connectors having static dogbone structures are described in European patent applications with filing numbers 21211202.3 and 21211199.1. European patent application with filing number 21212016.6 discloses a rotation actuated panel connector.

Yet other panel connectors are known from US2021062499A1.

It is an object of the invention to provide, at particularly low effort, a particularly well-performing panel connector.

This object is achieved by a connector according to claim 1. Dependent claims refer to preferred embodiments of the invention.

According to the invention,
- the panel connector further comprises a plug, which is arranged on the first head,
- wherein the second head comprises a socket for receiving the plug as the first head and the second head are drawn together by means of the linkage.

Thus a plug, i.e. a male fitting, and a corresponding socket are provided, which socket is intended to receive the plug so as to create an interlock between the first head and the second head. This interlock can provide load relief for the linkage, which in term can provide particularly good resistance against shear loads (i.e. loads directed parallel to the joint direction between the connected panels). Thus, a particularly well-performing connector can be achieved. The connector (which can also be named "dogbone connector" due to its shape) can provide connection for panels, in particular wooden panels, which combines panel alignment and fastening, and which can offer particularly high load performance in directions perpendicular (tensile load) and parallel (shear load) to the joint orientation.

The connector might be used to align and to connect two coplanar panels so as to fasten them with each other in butt-joint configuration. However, a corner-joint configuration is feasible as well. Both panels comprise opposing cutouts that are each intended to accommodate a head of the connector. The orientation of the connector (in particular the orientation of the longitudinal axis of the leadscrew mentioned further below) relative to the joint orientation might be perpendicular, but it can also be inclined by up to ±45°.

Preferably, the plug is attached to the first head, which can efficiently counteract undesired loosing of the plug before installation, whilst nevertheless providing full functionality. The plug might be fixedly attached to the first head, e.g. by gluing or wedging. It might also be floatingly attached, so as to provide some play, in particular axial play, between the plug and the first head. Floating attachment might e.g. be achieved by providing an elongate hole in the plug, and feeding a bolt attached to the first head through the elongate hole.

It is particularly preferred that the plug has elongated cross-section, wherein the elongation of the at least one plug extends in an insertion direction of the connector. Thus, in cross-section, the plug has greater extension in the insertion direction than in other directions, wherein the insertion direction is that direction that the connector is intended to be inserted into panels to be connected. An elongate cross-section can provide particularly good linkage support and thus connector performance. In the present connect, cross-section can be in particular a section perpendicular to the longitudinal axis of the leadscrew mentioned further below.

Preferably, the linkage comprises a leadscrew, which is mounted on either the first head or the second head, and a threaded nut, which is mounted on the other of the first head or the second head, wherein the leadscrew screwingly engages the threaded nut. Accordingly the linkage is based on a spindle drive mechanism, which can provide particularly good performance at low effort. When the leadscrew is mounted on the first head, the threaded nut is mounted on the second head, whereas when the leadscrew is mounted on the second head, the threaded nut is mounted on the first head. It is particularly preferred that the leadscrew is mounted on the second head (i.e. on that head on which the socket is provided), and the threaded nut is mounted on the first head (i.e. on that head on which the plug is provided). A defined installation condition can be achieved by applying a defined installation torque to the leadscrew. In particular if larger size heads are provided, for use with thicker panels, the linkage might also comprise at least one additional lead screw, which is mounted on either the first head or the second head, and at least one additional threaded nut, which is mounted on the other of the first head or the second head, wherein the additional leadscrew screwingly engages the additional threaded nut.

Throughout this document - wherever the terms "axially", "longitudinally", "radially" and "circumferentially" are used, they should refer, in particular, to the longitudinal axis of the leadscrew.

It is particularly advantageous that the leadscrew extends through the plug. Accordingly, the plug extends adjacent to the leadscrew, which can further improve performance.

Preferably, the plug forms a ring, and the leadscrew passes through said ring. Accordingly, the plug surrounds the leadscrew, which can e.g. advantageously improve bearing of the leadscrew.

In another embodiment, the plug comprises at least two separate plug elements. Accordingly, the plug is discontinuous. Preferably, the leadscrew is arranged between said plug elements, i.e. the leadscrew bisects the plug. Having separate plug elements might be advantageous in view of manufacturing and/or load transfer.

The first head and the plug can be integral parts, or the first head and the plug can be separate parts. If separate, the plug can e.g. be a metal part, and the first head a wood part.

Advantageously, the panel connector comprises at least one dowel pin (preferably two), which is embedded both within the first head and within the second head. This can further improve load absorption. The dowel pin is in particular arranged offset with respect to the longitudinal axis.

According to another preferred embodiment, the plug has a first lateral abutment surface and a second lateral abutment surface, wherein the first lateral abutment surface and the second lateral abutment surface are configured for abutting against at least one of the panels in which the connector is inserted, more preferably against both panels, in particular for lateral load transfer. Accordingly, the lateral abutment surfaces are configured to stick out of the socket when the connector is installed as intended, so as to provide lateral abutment against at least one of the panels that are connected by the connector, preferably against both of them. The first lateral abutment surface and the second lateral abutment surface, respectively, are opposite sides of the plug. The first lateral abutment surface and the second lateral abutment surface are preferably arranged parallel with respect to one another.

Preferentially, the plug has a taper zone, wherein the socket is configured for receiving the taper zone as the first head and the second head are drawn together by means of the linkage. It is particularly preferred that the socket is configured for receiving only the taper zone of the plug as the first head and the second head are drawn together by means of the linkage. This can be advantageous in view of guidance and stability.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is a perspective view of a first embodiment of a panel connector.
Figure 2 is a top view of the panel connector of figure 1, inserted into two adjacent panels, before the heads are pulled together by means of the linkage 9.
Figure 3 is a top view, alike that of figure 2, of the panel connector of figure 1, inserted into two adjacent panels, after the heads have been pulled together by means of the linkage 9.
Figure 4 is a sectional view A-A according to figure 3 of the embodiment of figure 1.
Figure 5 is a sectional view A-A according to figure 3 of a first modification of the connector of figure 1.
Figure 6 is a transparent side view of the **first** modification of the connector of figure 1.
Figure 7 is a perspective view of a **second** modification of the connector of figure 1.
Figure 8 is a transparent side view of the connector of figure 7.
Figure 9 is a top view of the panel connector of figure 7.
Figure 10 is a sectional view A-A according to figure 9 of the embodiment of figure 7.
Figure 11 is a perspective view of a **third** modification of the connector of figure 1.
Figure 12 is a top view of the panel connector of figure 11, inserted into two adjacent panels, before the heads are pulled together by means of the linkage 9.
Figure 13 is a top view, alike that of figure 12, of the panel connector of figure 11, inserted into two adjacent panels, after the heads have been pulled together by means of the linkage 9.
Figure 14 is a sectional view A-A according to figure 13 of the third modification of figure 1.

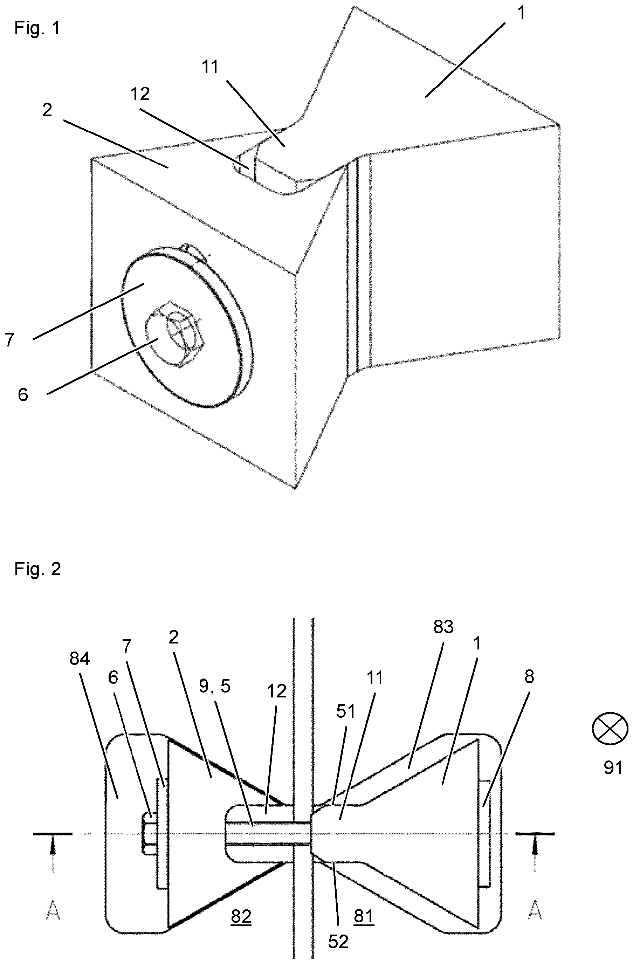

Figures 1 to 4 show a first embodiment of a panel connector. The connector comprises a first head 1 and a second head 2, and a linkage 9, which connects the first head 1 and the second head 2 to one another, and which is able to pull the first head 1 and the second head 2 towards one another. By way of example, the linkage 9 is a spindle mechanism. In particular, the linkage 9 comprises a threaded nut 8 and a leadscrew 5, which passes through the first head 1 and through the second head 2, wherein in the present embodiment, the leadscrew 5 is free to rotate. The leadscrew 5 comprises a screw head 6, which abuts against the second head 2. The threaded nut 8 abuts against the first head 1. In particular, the screw head 6 abuts against the back of the second head 2 and/or the threaded nut 8 abuts against the back of the first head 1. The back of the first head 1 is that side of the first head 1 that faces away from the second head 2, and the back of the second head 2 is that side of the second head 2 that faces away from the first head 1. In the shown embodiment, the threaded nut 8 is, by way of example, a flange threaded nut, which has a flange part for abutment against the first head 1 and a threaded sleeve which penetrates into the first head 1. However, other threaded nuts, such as standard threaded nuts or threaded muffles or glued-in sleeves with inner threads, might also be used. By way of example, the screw head 6 abuts against the second head 2 via a washer 7, in order to increase contact surface. However, direct abutment or abutment via other parts might also be envisaged.

The leadscrew 5 screwingly engages the threaded nut 8. When the leadscrew 5 is rotated (e.g. by engaging the screw head 6 with a wrench), the screw engagement of the leadscrew 5 within the threaded nut 8 transfers this rotational motion into linear motion, which can be transferred to the respective heads 1, 2 via the respective abutments. In particular, rotation of the leadscrew 5 in the screw-in direction can draw the heads 1 and 2 towards one another.

It should be noted that the shown spindle drive is an example only, and other types can be envisaged. For example, another type of spindle drive might comprise a leadscrew that is rotationally fixed on one of the heads and a threaded nut abutting against the other one of the heads, wherein the threaded nut is intended to be rotated for drawing the heads towards one another. Moreover, in the shown embodiment, the leadscrew 5 is mounted on the second head 2 and the threaded nut 8 is mounted on the first head 1. However, an inverse arrangement, in which the leadscrew 5 is mounted on the first head 1 and the threaded nut 8 is mounted on the second head 2 can also be envisaged.

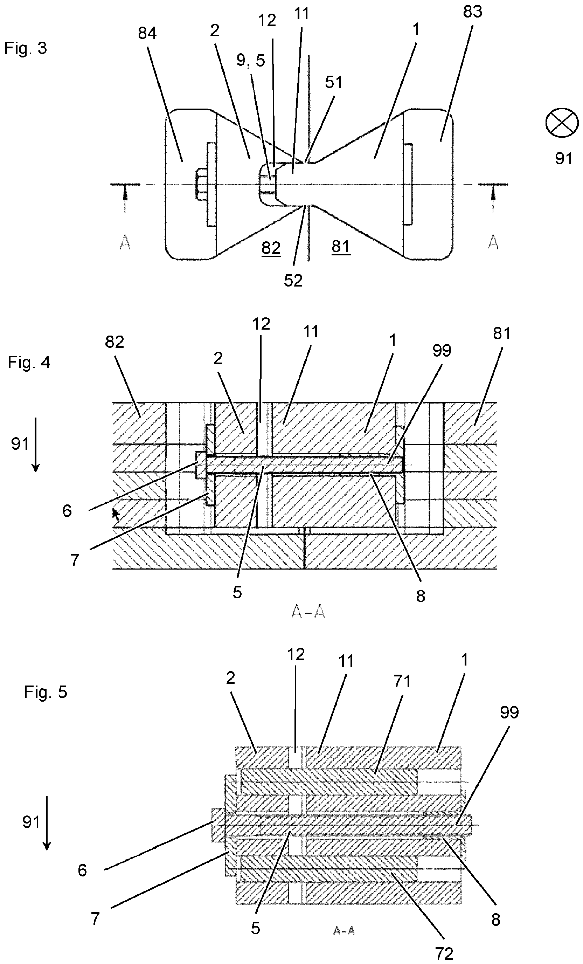

The connector is intended for connecting a first panel 81 and a second panel 82 with one another. The first panel 81 is provided with a first cutout 83, intended for receiving the first head 1, and the second panel 82 is provide with a second cutout 84, intended for receiving the second head 2. The connector is intended to be inserted into the adjacent panels 81, 82 in the connector insertion direction 91. The connector insertion direction 91 points into the drawing plane of figures 2 and 3. The connector insertion direction 91 extends perpendicular to a longitudinal axis 99 of the leadscrew 5. Once the connector is inserted into the cutouts 83, 84, the linkage 9 is operated for drawing the panels 81, 82 towards one another for interconnecting the panels 81, 82.

For example, the first head 1 and/or the second head 2 may consist of a metal material, plastic material, or wood material (including laminated veneer lumber (LVL) and injected molded wooden feedstock (i.e. wooden granulate in combination with organic resin)). Preferably, the first panel 81 and/or the second panel 82 consist of a wood material.

The front of the first head 1, i.e. the side of the first head 1 which faces the second head 2 (and which is the side opposite the back of the first head 1), tapers towards the second head 2. Likewise, the front of the second head 2, i.e. the side of the second head 2 which faces the first head 1 (and which is the side opposite the back of the second head 2), tapers towards the first head 1. In both cases, taper is in the direction of the longitudinal axis 99 of the leadscrew 5. In both cases, taper is linear and symmetrical, and/or in both cases, a line of convergence of the respective taper extends in the connector insertion direction 91. In both cases, the opening angle of the taper can preferably range from 15° to 130°, inclusive, with 40° to 60°, inclusive, being a particularly preferred range.

When the connector is inserted as intended, the first head 1 is, at its front, configured to abut against an inner contact surface of the first cutout 83 and the second head 2 is, at its front, configured to abut against an inner contact surface of the second cutout 84. In the present embodiment, the envelope of the respective contact faces is given by a triangular or trapezoid shape.

The envelope shape of the contact faces of the cutouts 83, 84 is congruent with the shape of the respective fronts of the corresponding heads 1, 2 facing said contact faces. The cutouts 83, 84 therefore have a similar triangular or trapezoid envelope contour of the contact faces. Because of this congruence between the heads 1 and 2 and the respective cutouts 83, 84, a self-centering effect in the direction perpendicular and parallel to joint orientation is given when the heads are drawn together, so that the perpendicular gap and the parallel offset are generally nullified. Usually, the described self-centering effect is present only if the head and the respective cutout have congruent shapes - whereas if the respective shapes are different or non-congruent (e.g. if a head with a triangular front is sitting inside a circular cutout), the self-centering effect during drawing the heads together is effective only in perpendicular direction to the joint, whereas the parallel offset is not nullified.

The panel connector further comprises a plug 11, which is arranged on the first head 1 and which projects from the first head 1, namely at the front thereof, in a direction parallel to the longitudinal axis 99 of the leadscrew 5. In the first embodiment, the first head 1 is fixedly attached to the first head 1, and in particular, the first head 1 and the plug 11 are a single piece.

The second head 2 has, at its front, a socket 12, which faces the plug 11, and which is configured to receive the plug 11 when the first head 1 and the second head 2 are drawn together, thereby providing an additional interlocking mechanism.

The plug 11 has elongate cross-section (wherein cross-section is determined perpendicular to the longitudinal axis 99 of the leadscrew 5), wherein elongation extends parallel to the insertion direction 91 and/or perpendicular to the longitudinal axis 99 of the leadscrew 5.

The plug 11 has a height, measured parallel to the insertion direction 91, which is generally the same has the height of the first head 1. Likewise, the socket 12 has a height, measured parallel to the insertion direction 91, which is generally the same has the height of the second head 2. However, this is an example only and the plug 11 could e.g. also have a height that is smaller than the height of the first head 1.

The leadscrew extends through the plug 11 and through the socket 12. Preferably, the plug 11 surrounds the leadscrew 5 where the leadscrew 5 extends through the plug 11, i.e. the plug 11 forms a ring through which the leadscrew 5 passes.

The plug 11 has a first lateral abutment surface 51 and a second lateral abutment surface 52. The first lateral abutment surface 51 and the second lateral abutment surface 52 can abut against corresponding side walls of the socket 12. In addition, the lateral abutment surfaces 51 and 52 are intended to abut against corresponding side walls provided both in the second cutout 84 of the second panel 82 and in the first cutout 83 of the first panel 81 when the panel connector is installed as intended, as can be seen in figure 3. The first lateral abutment surface 51 and the second lateral abutment surface 52 are preferably parallel to one another.

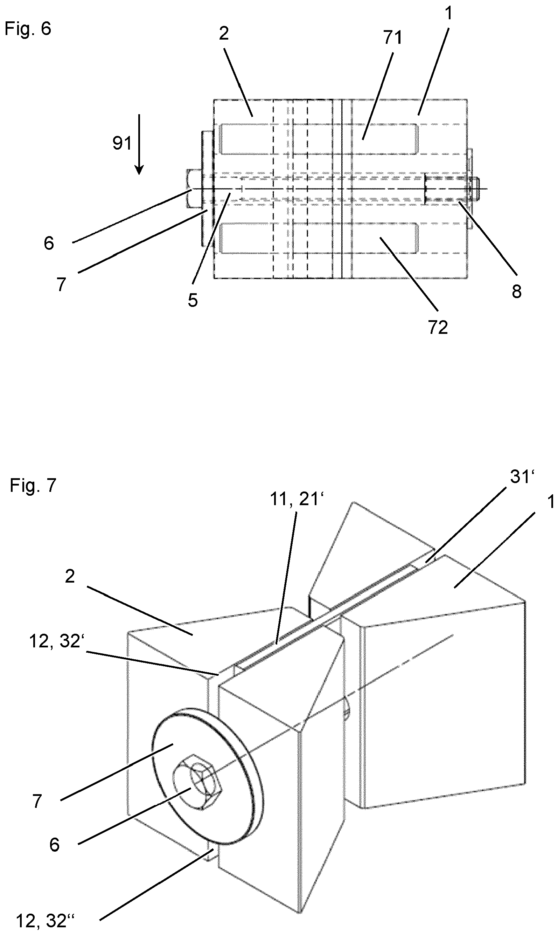

Figures 5 and 6 show a first modification of the first embodiment of a panel connector. The first modification is characterized in that the panel connector additionally comprises a first dowel pin 71 and a second dowel pin 72, wherein both the first dowel pin 71 and a second dowel pin 72 are embedded both within the first head 1 and within the second head 2. Both dowel pins 71 and 72 extend generally parallel to the longitudinal axis 99 of the leadscrew 5, and are arranged eccentrically with respect to the longitudinal axis 99 of the leadscrew 5. By way of example, the dowel pins 71, 72 have circular cross-section, but other cross-sections, such as rectangular or oval cross-sections, can also be envisaged. The first dowel pin 71 and the second dowel pin 72 might, for example, consist of a metal material.

The dowel pins 71 and 72 provide an additional positive locking guide element that can counteract tilting of the two clamping heads in out-of-plane direction. This configuration can also provide additional shear resistance in a direction parallel to joint.

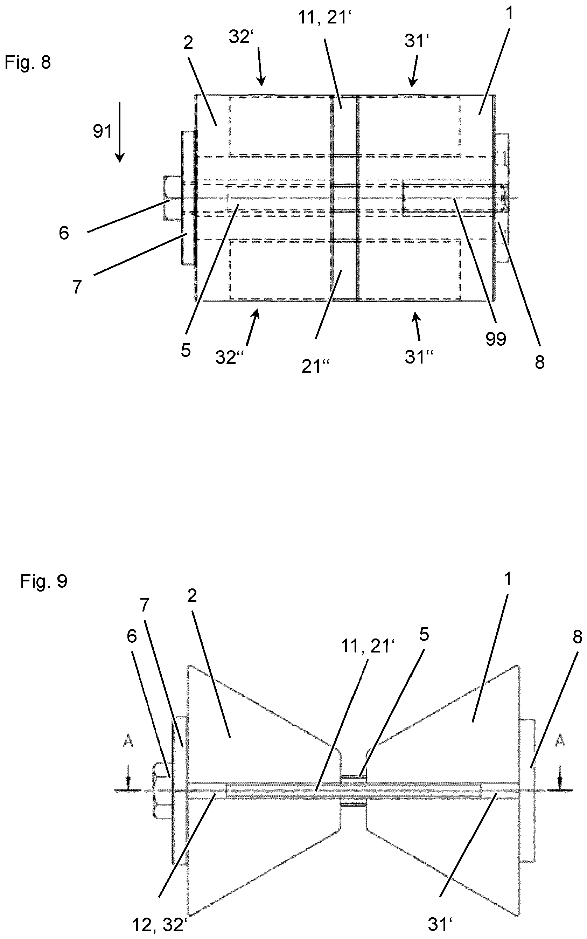

Figures 7 to 10 show a second modification of the first embodiment of a panel connector. The second modification differs from the original first embodiment in the configuration of the plug and to corresponding socket.

According to the second modification, the plug 11 is discontinuous and is formed by two separate plug elements, namely by a first plug element 21' and by a second plug element 21".

The first plug element 21' has elongate, preferably rectangular, cross-section (wherein cross-section is determined perpendicular to the longitudinal axis 99 of the leadscrew 5), wherein elongation extends parallel to the insertion direction 91 and/or perpendicular to the longitudinal axis 99 of the leadscrew 5. Likewise, the second plug element 21" has elongate, preferably rectangular, cross-section (wherein cross-section is again determined perpendicular to the longitudinal axis 99 of the leadscrew 5), wherein elongation extends parallel to the insertion direction 91 and/or perpendicular to the longitudinal axis 99 of the leadscrew 5. The first plug element 21' and the second plug element 21" extend on opposite sides of the leadscrew 5. The leadscrew 5 thus extends through the plug 11 so as to disrupt and bisect the plug 11, and the first plug element 21' and the second plug element 21" are arranged eccentrically with respect to the longitudinal axis 99. The plug elements 21', 21" can for example consist of a metal material, preferably of steel. The plug elements 21', 21" can for example have a thickness in a range of 2mm to 8mm.

Each of the plug elements 21', 21" projects from the first head 1, namely at the front of the first head 1, in a direction parallel to the longitudinal axis 99 of the leadscrew 5. In case of this embodiment, the plug elements 21', 21" however also do extend into the first head 1 for connecting the plug elements 21' 21" to the first head 1.

Each of the plug elements 21', 21" is fixedly attached to the first head 1. The first head 1 comprises, on its top side, a first groove 31', and, on its bottom side, a second groove 31", wherein both the first groove 31' and the second groove 31" extend in a direction parallel to the longitudinal axis 99 of the leadscrew 5. The first plug element 21' is received within the first groove 31', and the second plug element 21" is received within the second groove 31". Fixed attachment of the plug elements 21', 21" to the first head 1 can be achieved by any suitable means, such a gluing, clamping, riveting, bolting, screwing and others. In addition to fixed attachment, a floating attachment which allows some axial (with respect to the longitudinal axis 99) play can also be envisaged.

The second head 2 comprises, on its top side, a first groove 32', and, on its bottom side, a second groove 32", wherein both the first groove 32' and the second groove 32" extend in a direction parallel to the longitudinal axis 99 of the leadscrew 5. The first groove 32' and the second groove 32" constitute the socket 12, i.e. the socket 12 consist of the first groove 32' and of the second groove 32". Thus, in the second modification, the socket 12 is discontinuous.

The first groove 32' is intended to receive the first plug element 21' and the second groove 32" is intended to receive the second plug element 21". The first plug element 21' can be simply plugged into the first groove 32' and the second plug element 21" can be simply plugged into the second groove 32". However, a floating bearing of the plug elements 21' and 21" in their respective grooves 32', 32", which provides fixation with axial play, can also be envisaged.

The plug 11 that is formed by separate plug elements 21' and 21" (preferably of metal material) can reinforce the linkage 9 when loaded in a direction parallel to joint orientation is present. This can be particularly beneficial in case of cyclic dynamic shear loading conditions (e.g. seismic events). Cyclic bending of the (preferably steel) plug elements 21' and 21" can provide shear resistance and energy dissipation while relieving the leadscrew 5 that is joining the heads 1 and 2.

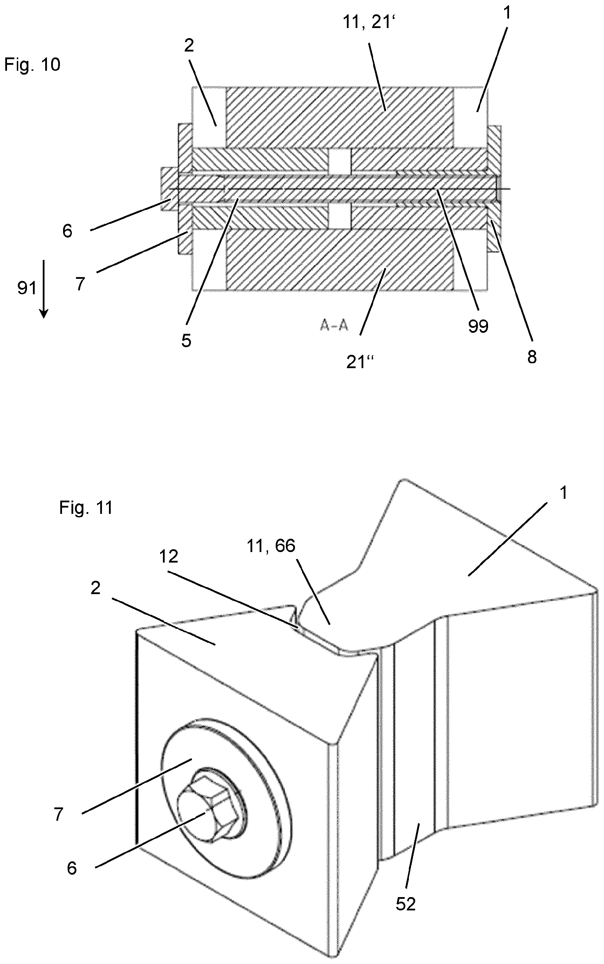

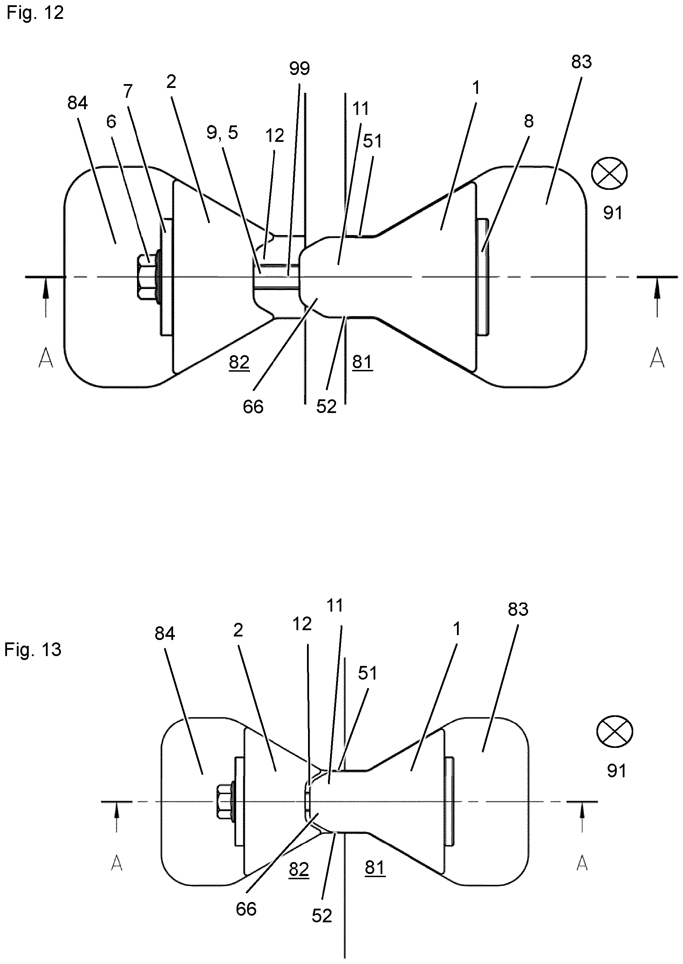

Figures 11 to 14 show a third modification of the first embodiment. According to the third modification, the extension of the socket 12 towards the first head 1 is smaller, when compared to the first embodiment. In addition, compared to the first embodiment, the abutment length between the lateral abutment surfaces 51 and 52 of the plug 11 and the corresponding side walls provided in the second cutout 84 of the second panel 82 is greater (when the panel connector is installed as intended), as can be seen e.g. in figure 13. According to the third modification, an abutment of the lateral abutment surfaces 51 and 52 of the plug 11 with corresponding side walls provided in the first cutout 83 of the first panel 81 is also present when the panel connector is installed as intended. In case of the third modification, the lateral abutment surfaces 51 and 52 do not need to reach into the socket 12.

According to the third modification, the plug 11 is provided with a taper zone 66, which is intended to be received by the socket 12. In the taper zone 66, the plug 11 tapers towards the free end of the plug 11, i.e. the width of the plug 11 decreases as the free end of the plug 11 is approached, i.e. as the plug 11 approaches the second head 2. In particular, in the taper zone 66, the width of the plug 11 decreases along the longitudinal axis 99. Width of the plug 11 is in particular measured perpendicularly to the longitudinal axis 99 and/or perpendicular to the insertion direction 91. In particular, the panel connector can be so dimensioned that at least the taper zone 66 of the plug 11 is received by the socket 12. In the third modification, the panel connector is so dimensioned that only the taper zone 66 of the plug 11 is received by the socket 12 when the connector is installed as intended.

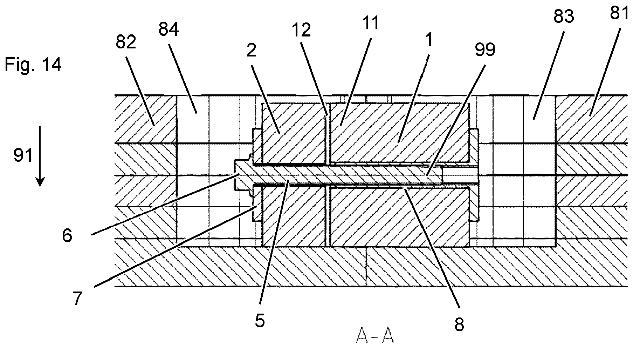

As can be taken from figure 14, the third modification of the panel connector can be installed in sunk manner. Accordingly, the height of the first head 1 is smaller than the depth of the receiving first cutout 83, and the height of the second head 2 is smaller than the height of the receiving second cutout 84 (wherein heights and depths are measured in the insertion direction 91). All other embodiments and modifications can also be installed in sunk manner.

## Claims

1. Panel connector, comprising
- a first head (1),
- a second head (2), and
- a linkage (9), which connects the first head (1) and the second head (2) with one another, and which is suitable for drawing the first head (1) and the second head (2) together,
**characterized in that**
- the panel connector further comprises a plug (11), which is arranged on the first head (1),
- wherein the second head (2) comprises a socket (12) for receiving the plug (11) as the first head (1) and the second head (2) are drawn together by means of the linkage (9).

2. Connector according to claim 1,
**characterized in that**
the plug (11) is attached to the first head (1).

3. Connector according to any of the preceding claims,
**characterized in that**
the plug (11) has elongated cross-section, wherein the elongation of the at least one plug (11) extends in an insertion direction (91) of the connector.

4. Connector according to any of the preceding claims,
**characterized in that**
the linkage (9) comprises a leadscrew (5), which is mounted on either the first head (1) or the second head (2), and a threaded nut (8), which is mounted on the other of the first head (1) or the second head (2), wherein the leadscrew (5) screwingly engages the threaded nut (8).

5. Connector according to claim 4,
**characterized in that**
the leadscrew (5) extends through the plug (11).

6. Connector according to any of claims 4 or 5,
**characterized in that**
the plug (11) forms a ring, and the leadscrew (5) passes through said ring.

7. Connector according to any of the preceding claims,
**characterized in that**
the plug (11) comprises at least two separate plug elements (21', 21").

8. Connector according to any of the preceding claims,
**characterized in that**
the first head (1) and the plug (11) are integral parts, or the first head (1) and the plug (11) are separate parts.

9. Connector according to any of the preceding claims,
**characterized in that**
it comprises at least one dowel pin (71, 72), which is embedded both within the first head (1) and within the second head (2).

10. Connector according to any of the preceding claims,
**characterized in that**
the plug (11) has a first lateral abutment surface (51) and a second lateral abutment surface (52), wherein the first lateral abutment surface (51) and the second lateral abutment surface (52) are configured for abutting against at least one panel (81 and/or 82) in which the connector is inserted.

11. Connector according to any of the preceding claims,
**characterized in that**
the plug (11) has a taper zone (66), wherein the socket (12) is configured for receiving only the taper zone (66) of the plug (11) as the first head (1) and the second head (2) are drawn together by means of the linkage (9).
